# FASCICULE DE BREVET EUROPEEN

(11) **EP 2 304 204 B1**
(45) Date de publication et mention de la délivrance du brevet: **30.03.2016**
(21) Numéro de dépôt: 09772690.5
(22) Date de dépôt: 03.06.2009
(51) Int. Cl.: F02C 7/04, B64D 33/02

(54) **PROCÉDÉ DE DÉPOSE D'UN REVÊTEMENT VISANT À AMÉLIORER L'ÉCOULEMENT LAMINAIRE**
VERFAHREN ZUM AUFBRINGEN EINER BESCHICHTUNG ZUR VERBESSERUNG DER LAMINARSTRÖMUNG
METHOD FOR APPLYING A COATING WHICH AMELIORATES LAMINAR FLOW

(30) Priorité: 06.06.2008 FR 0853758
(43) Date de publication de la demande: 06.04.2011
(73) Titulaire: Airbus Opérations SAS, 31060 Toulouse (FR)
(72) Inventeur: PORTE, Alain, F-31770 Colomiers (FR); DESCAMPS, Philippe, F-44400 Reze (FR)
(74) Mandataire: Fantin, Laurent
(86) Numéro de dépôt international: PCT/FR2009/051048
(87) Numéro de publication internationale: WO 2010/001008

(56) Documents cités:
- EP-A- 0 939 028
- EP-A- 1 111 226
- FR-A- 2 787 509
- FR-A- 2 887 520
- US-A- 5 427 332
- US-A1- 2006 145 001

## Description

La présente invention se rapporte à un procédé de dépose d'un revêtement visant à améliorer l'écoulement laminaire au niveau de la jonction d'un bord d'attaque et d'une surface adjacente, plus particulièrement adapté pour améliorer l'écoulement laminaire au niveau de la jonction d'une lèvre et d'une surface extérieure d'une nacelle.

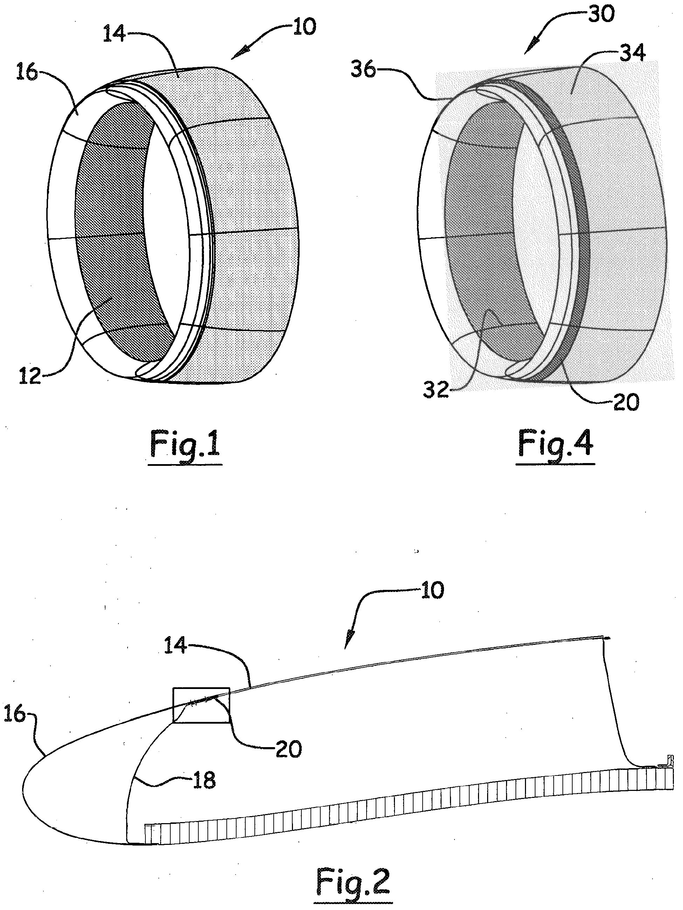

Sur les figures 1, 2 et 3, on a représenté une nacelle 10 comprenant au moins un conduit intérieur 12, une surface extérieure 14, et à l'avant, une entrée d'air délimitée par une lèvre 16 qui relie le conduit intérieur 12 et la surface extérieure 14.

Les parois du conduit intérieur, de la lèvre ou de la surface extérieure sont obtenues par l'assemblage de plusieurs panneaux, de plusieurs plaques, de plusieurs peaux ou analogues. Pour la suite de la description, toutes ces formes de paroi seront désignées par le terme panneau.

La structure de la nacelle comprend un cadre avant 18 reliant la surface extérieure 14 et le conduit intérieur 12, et supportant la lèvre 16. Le cadre avant 18 comprend un premier bord disposé au niveau de la jonction de la surface extérieure 14 et de la lèvre 16 et un second bord disposé au niveau de la jonction du conduit intérieur 12 et de la lèvre 16.

Au niveau du premier bord, le cadre avant 18 comprend une surface d'appui 20 au niveau de laquelle sont solidarisées la surface extérieure 14 et la lèvre 16, grâce à des moyens de fixation 22. Pour réduire l'influence sur la trainée, les panneaux de la surface extérieure 14 et de la lèvre 16 sont mis bout à bout et ne se chevauchent pas.

Ce type d'agencement ne donne pas pleinement satisfaction pour les raisons suivantes :

Les moyens de fixation 22, généralement des rivets affleurant au niveau des surfaces aérodynamiques, génèrent des perturbations ce qui tend à augmenter la traînée et par conséquence la consommation énergétique de l'aéronef.

Même s'il est possible de rectifier les variations entre les épaisseurs des panneaux mis bout à bout grâce à des cales 24, pelables ou usinables, le défaut de continuité de surface entre les surfaces extérieures des panneaux mis bout à bout ne peut pas être corrigé. Ce défaut au niveau de la jonction des panneaux de la surface extérieure 14 et de la lèvre 16 génère des perturbations qui tendent à augmenter la traînée et par conséquence la consommation énergétique de l'aéronef.

A titre d'exemple, le brevet FR-2.787.509 décrit des rivets affleurants pour raccorder un panneau acoustique à une entrée d'air.

Aussi, la présente invention vise à pallier aux inconvénients de l'art antérieur en proposant un procédé de dépose d'un revêtement pour améliorer les écoulements laminaires au niveau de la zone de jonction entre un bord d'attaque et une autre surface adjacente.

A cet effet, l'invention a pour objet un procédé de dépose d'un revêtement visant à améliorer les écoulements laminaires au niveau d'une jonction entre un premier panneau d'un bord d'attaque et un second panneau d'une surface adjacente selon le sens desdits écoulement le premier panneau et le second panneau étant mis bout à bout et comportant des surfances extérieurs qui comprennent une partie en saillie par rapport à une surface continue théorique au niveau de la jonction, caractérisé en ce qu'il comprend les étapes suivantes consistant à :
- déterminer la surface continue théorique au niveau de ladite jonction,
- réaliser une rainure de faible profondeur d par rapport à la surface continue théorique, practiquée dans les deux surfaces extérieures des panneaux de part et d'autre de ladite jonction qui s'étend sur une largeur l telle que les surfaces extérieures desdits panneaux ne viennent plus en saillie par rapport à la surface théorique, et
- déposer un revêtement dans la rainure de manière à la combler.

Selon une application, l'invention a pour objet une nacelle d'aéronef comportant un conduit intérieur, une surface extérieure, et à l'avant, une entrée d'air délimitée par une lèvre qui relie le conduit intérieur et la surface extérieure une jonction entre ladite lèvre et la surface extérieur mises bout à bout ladite lèvre et la surface extérieur comportant des surfaces extérieurs qui comprennent une partie en saillie par rapport à une surface continue théorique au niveau de la jonction, caractérisée en ce qu'elle comprend, au niveau de la jonction entre ladite lèvre et la surface extérieure, une rainure de faible profondeur par rapport à la surface continue théorique de ladite jonction practiquée dans les deux surfaces extérieures des panneaux de ladite lèvre et de la surface extérieure de part et d'autre de ladite jonction, qui s'étend sur une largeur telle que les surfaces extérieures des panneaux de ladite lèvre et de la surface extérieure ne viennent plus en saillie par rapport à la surface théorique, et un revêtement disposé dans la rainure de manière à la combler.

D'autres caractéristiques et avantages ressortiront de la description qui va suivre de l'invention, description donnée à titre d'exemple uniquement, en regard des dessins annexés sur lesquels :
- la figure 1 est une vue en perspective de l'avant d'une nacelle d'un aéronef selon l'art antérieur,
- la figure 2 est une coupe selon un plan longitudinal d'une partie de l'avant d'une nacelle d'aéronef,
- la figure 3 est une coupe illustrant la zone de jonction de la lèvre et de la surface extérieure d'une nacelle selon l'art antérieur,
- la figure 4 est une vue en perspective de l'avant d'une nacelle selon l'invention,
- la figure 5 est une coupe illustrant la zone de jonction de la lèvre et de la surface extérieure d'une nacelle selon une première variante de l'invention,
- la figure 6 est une coupe illustrant la zone de jonction de la lèvre et de la surface extérieure d'une nacelle selon une autre variante de l'invention, extérieure de part et d'autre de ladite jonction
- les figures 7A et 7C sont des coupes illustrant les différentes étapes de la mise en place du revêtement selon l'invention, et
- la figure 8 est une coupe selon un plan longitudinal d'une partie de l'avant d'une nacelle d'aéronef illustrant la formation d'un flux d'air entre l'extérieur et l'intérieur de la nacelle.

Sur les figures 4, 5 et 6, on a représenté en 30 une nacelle comportant un conduit intérieur 32, une surface extérieure 34, et à l'avant, une entrée d'air délimitée par une lèvre 36 qui relie le conduit intérieur 32 et la surface extérieure 34. Les autres éléments ne sont pas représentés et décrits car ils sont connus de l'homme du métier.

Le conduit intérieur et la surface extérieure sont obtenues par l'assemblage de plusieurs panneaux, de plusieurs plaques, de plusieurs peaux ou analogues. Pour la suite de la description, toutes ces formes de paroi seront désignées par le terme panneau.

Le conduit intérieur, la surface extérieure et la lèvre peuvent être métalliques et/ou en matériau composite.

Comme pour le conduit intérieur, la paroi de la lèvre est formée par un panneau ou un assemblage de panneau.

La structure de la nacelle comprend un cadre avant 38 reliant la surface extérieure 34 et le conduit intérieur 32, et supportant la lèvre 36. Le cadre avant 38 comprend un premier bord disposé au niveau de la jonction de la surface extérieure 34 et de la lèvre 36 et un second bord disposé au niveau de la jonction du conduit intérieur 32 et de la lèvre 36.

Au niveau du premier bord, le cadre avant 38 comprend une surface d'appui 40 au niveau de laquelle sont solidarisées la surface extérieure 34 et la lèvre 36, grâce à des moyens de fixation 42, par exemple une ou plusieurs séries de rivets. Pour réduire l'influence sur la trainée, les panneaux de la surface extérieure 34 et de la lèvre 36 sont mis bout à bout et ne se chevauchent pas.

Selon les cas, au moins une cale 44 peut être interposée entre la surface d'appui 40 du cadre avant et le panneau de la surface extérieure 34 et/ou de la lèvre 36 afin de compenser l'éventuelle différence d'épaisseur entre les deux panneaux mis bout à bout au niveau de la zone de jonction.

Les surfaces extérieures des panneaux ne sont pas continues au niveau de la jonction, notamment en raison des différences de rayons de courbure des panneaux mis bout à bout. Ainsi, il existe un écart entre la surface continue théorique 46 de la jonction, représentée en pointillée sur la surface 7A, et les surfaces extérieures des panneaux mis bout à bout qui comprennent une partie en saillie par rapport à ladite surface continue théorique au niveau de la jonction.

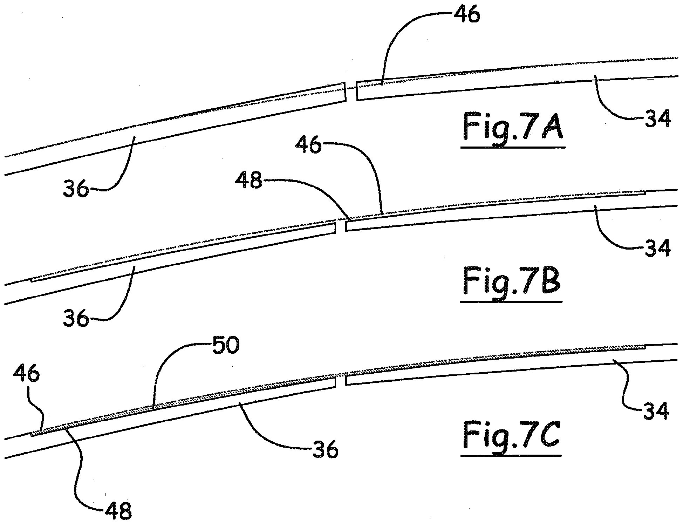

Selon l'invention, une fois les panneaux assemblés, comme illustré sur la figure 7A, on détermine la surface continue théorique 46 en venant par exemple effectuer des mesures de part et d'autre de la jonction sur la périphérie de la nacelle.

En suivant, on réalise un retrait de matière, par exemple par usinage, afin que les surfaces extérieures des panneaux de la surface extérieure 34 et de la lèvre 36 ne viennent plus en saillie par rapport à la surface théorique. On réalise une rainure 48 de faible profondeur par rapport à la surface continue théorique 46, qui s'étend, selon une coupe perpendiculaire à la jonction, sur une largeur de part et d'autre de ladite jonction, approximativement du point de divergence entre la surface extérieure du panneau de la lèvre 36 avant usinage et la surface continue théorique 46, jusqu'au point de divergence entre la surface extérieure du panneau de la surface extérieure 34 avant usinage et la surface continue théorique 46, comme illustré sur la figure 7B.

Cette rainure 48 s'étend sur toute la périphérie de la nacelle, sur 360°. Avantageusement, la largeur de la rainure est telle que le revêtement recouvre les moyens de fixation.

Après ce retrait de matière, un revêtement 50 est disposé dans la rainure 48 de manière à la combler. L'épaisseur du revêtement 50 est sensiblement égale à la profondeur d de la rainure afin que la surface extérieure dudit revêtement épouse la forme de la surface continue théorique, comme illustré sur la figure 7C.

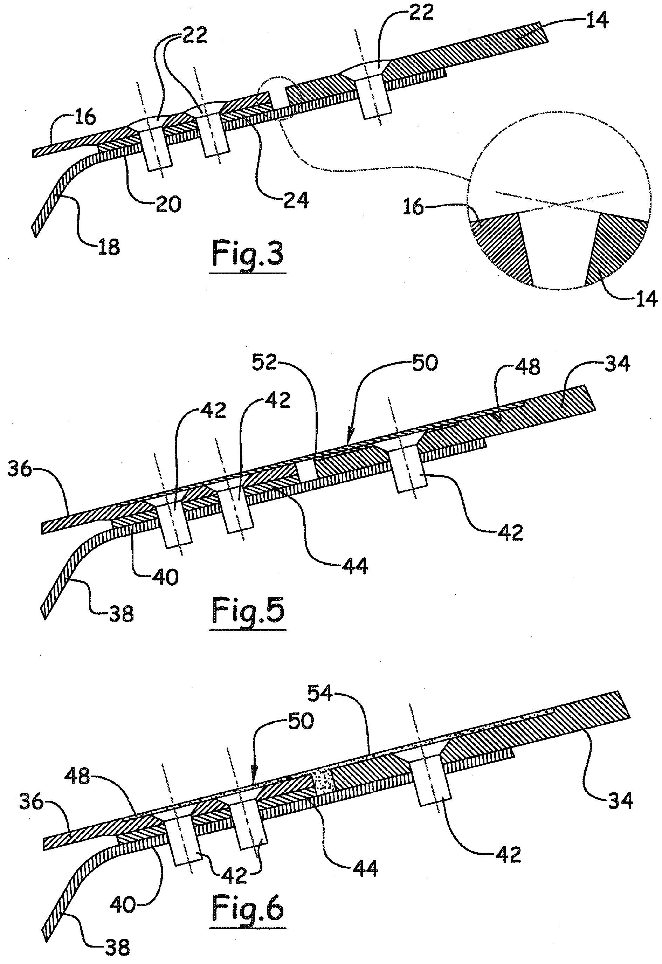

Selon une première variante illustrée sur la figure 5, le revêtement 50 comprend une tôle 52 également appelée cerclage, d'épaisseur relativement faible, sensiblement égale à la profondeur de la rainure 48, et de largeur sensiblement égale à celle de la rainure 48 de sorte à épouser parfaitement la forme de ladite rainure 48. Avantageusement, la tôle 52 est étirée lors de la dépose et maintenue en tension une fois fixée afin que sa surface extérieure soit sensiblement confondue avec la surface continue théorique 46.

Avantageusement, la tôle 52 est préalablement mise en forme sur un moule. Cette tôle 52 comprend une zone de fixation pour fermer le cerclage, représentant une zone réduite susceptible de générer des turbulences négligeables par rapport au gain apporté en laminarité. Cette zone de fixation peut être remplacée par un cordon de soudure poli limitant considérablement la génération de turbulences.

La tôle 52 peut être métallique. Sa matière est choisie afin que son coefficient de dilatation soit adapté à celui des autres éléments adjacents de la nacelle.

Selon une autre variante illustrée sur la figure 6, le revêtement 50 est obtenu par l'application d'un enduit ou d'une peinture 54 visant à combler la rainure 48 de manière à ce que la surface extérieure du revêtement 50 soit sensiblement confondue avec la surface continue théorique 46.

Selon un mode de réalisation, le revêtement 50 est une peinture anticorrosion à base de silicone, ladite peinture étant appliquée par tous moyens appropriés en une ou plusieurs couche(s) en fonction de l'épaisseur de la rainure 48.

Le matériau du revêtement est choisi de manière à avoir une certaine élasticité afin de s'adapter aux variations dimensionnelles découlant des phénomènes de dilatation.

L'espace entre les panneaux peut être comblé avec la même matière que le revêtement ou avec une autre matière.

Contrairement à la variante de la figure 5, l'application d'une enduction ou d'une peinture ne nécessite pas une fixation comme dans le cas d'un cerclage ce qui permet d'optimiser la laminarité.

Selon une autre caractéristique de l'invention, le revêtement 50, notamment la tôle 52, est perforé et de préférence microperforé pour permettre le passage d'un flux d'air à travers ledit revêtement 50.

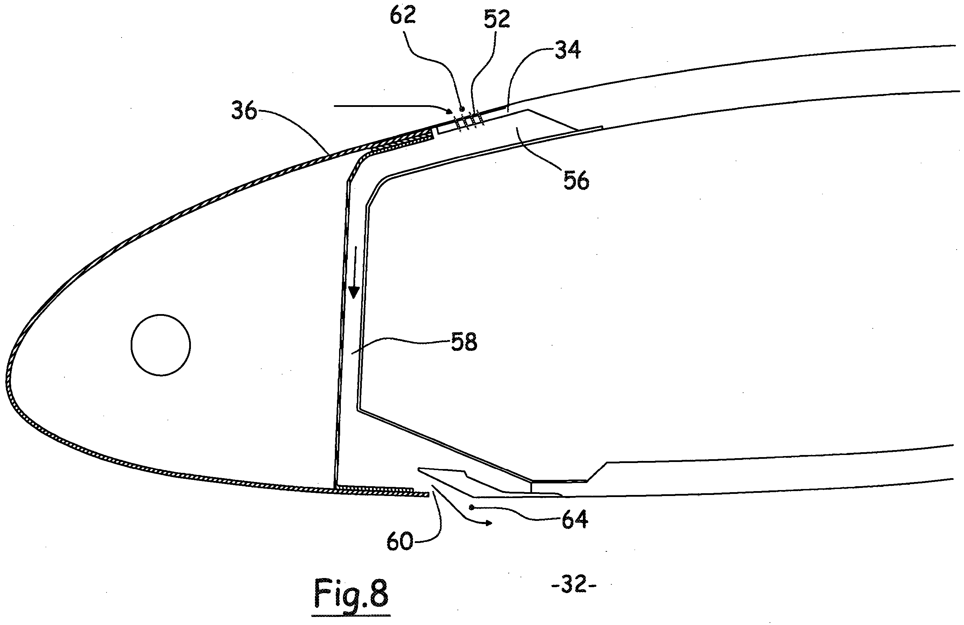

Dans ce cas, comme illustré sur la figure 8, une cavité 56 est prévue sous le revêtement 50 de manière à collecter l'air traversant ledit revêtement, cette cavité s'étendant sur au moins une partie de la périphérie et de préférence sur toute la périphérie. Au moins un conduit 58 relie cette cavité à au moins un orifice 60 débouchant dans le conduit intérieur 32. De préférence, les orifices 60 ont des formes adaptées pour éjecter l'air dans le conduit intérieur 32 de manière tangentielle à la surface dudit conduit dans le sens d'écoulement du flux d'air canalisé par l'entrée d'air de la nacelle.

En vol dans la mesure où il existe une différence de pression entre un point 62 disposé à l'extérieur de la nacelle à proximité du revêtement 50 et un point 64 situé dans le conduit intérieur 32 à proximité d'un orifice 60, il se crée de manière naturelle un flux d'air entre ses deux points 62 et 64 en direction du point 64 placé à l'intérieur du conduit intérieur 32. Ce flux d'air généré de manière naturelle et éjecté via des orifices débouchant dans le conduit intérieur peut permettre de limiter les risques de décollement de la veine d'air s'écoulant dans le conduit intérieur 32.

Bien entendu, l'invention n'est évidemment pas limitée au mode de réalisation représenté et décrit ci-dessus, mais en couvre au contraire toutes les variantes, notamment en ce qui concerne les formes, les dimensions et la matière du revêtement.

## Revendications

1. Procédé de dépose d'un revêtement visant à améliorer les écoulements laminaires au niveau d'une jonction entre un premier panneau (36) d'un bord d'attaque et un second panneau (34) d'une surface adjacente selon le sens desdits écoulements, le premier panneau (36) et le second panneau (34) étant mis bout à bout et comportant des surfaces extérieures qui comprennent une partie en saillie par rapport à une surface continue théorique (46) au niveau de la jonction, **caractérisé en ce qu'**il comprend les étapes suivantes consistant à :
- déterminer la surface continue théorique (46) au niveau de ladite jonction,
- réaliser une rainure (48) de faible profondeur par rapport à la surface continue théorique (46), pratiquée dans les deux surfaces extérieures des panneaux de part et d'autre de ladite jonction, qui s'étend sur une largeur telle que les surfaces extérieures desdits panneaux (34, 36) ne viennent plus en saillie par rapport à la surface théorique (46), et
- déposer un revêtement (50) dans la rainure (48) de manière à la combler.

2. Procédé de dépose d'un revêtement visant à améliorer les écoulements laminaires selon la revendication 1, **caractérisé en ce que** l'épaisseur du revêtement (50) est ajustée de manière à ce que la surface extérieure dudit revêtement (50) soit confondue avec la surface continue théorique (46).

3. Procédé de dépose d'un revêtement visant à améliorer les écoulements laminaires selon la revendication 1 ou 2, **caractérisé en ce que** le revêtement (50) comprend une tôle (52), d'épaisseur relativement faible, sensiblement égale. à la profondeur de la rainure (48), et de largeur sensiblement égale à celle de la rainure (48) de sorte à épouser parfaitement la forme de ladite rainure (48).

4. Procédé de dépose d'un revêtement visant à améliorer les écoulements laminaires selon la revendication 3, **caractérisé en ce que** la tôle (52) est étirée lors de la dépose et maintenue en tension une fois fixée.

5. Procédé de dépose d'un revêtement visant à améliorer les écoulements laminaires selon la revendication 1 ou 2, **caractérisé en ce que** le revêtement (50) est obtenu par l'application d'un enduit ou d'une peinture (54) visant à combler la rainure (48) de manière à ce que la surface extérieure du revêtement (50) soit sensiblement confondue avec la surface continue théorique (46).

6. Nacelle d'aéronef comportant :
- un conduit intérieur (32),
- une surface extérieure (34),
- à l'avant, une entrée d'air délimitée par une lèvre (36) qui relie le conduit intérieur (32) et la surface extérieure (34),
- une jonction entre ladite lèvre (36) et la surface extérieure (34) mises bout à bout, ladite lèvre (36) et la surface extérieure (34) comportant des surfaces extérieures qui comprennent une partie en saillie par rapport à une surface continue théorique (46) au niveau de la jonction,
**caractérisée en ce qu'**elle comprend, au niveau de la jonction, une rainure (48) de faible profondeur par rapport à la surface continue théorique (46) de ladite jonction, pratiquée dans les deux surfaces extérieures des panneaux de ladite lèvre (36) et de la surface extérieure (34) de part et d'autre de ladite jonction, qui s'étend sur une largeur telle que les surfaces extérieures des panneaux de ladite lèvre (36) et de la surface extérieure (34) ne viennent plus en saillie par rapport à la surface théorique (46), et un revêtement (50) disposé dans la rainure (48) de manière à la combler.

7. Nacelle d'aéronef selon la revendication 6, **caractérisée en ce que** le revêtement (50) a une épaisseur telle que la surface extérieure dudit revêtement (50) soit confondue avec la surface continue théorique (46).

8. Nacelle d'aéronef selon la revendication 6 ou 7, **caractérisée en ce que** le revêtement (50) comprend une tôle (52), d'épaisseur relativement faible, sensiblement égale à la profondeur de la rainure (48), et de largeur sensiblement égale à celle de la rainure (48) de sorte à épouser parfaitement la forme de ladite rainure (48).

9. Nacelle d'aéronef selon la revendication 6 ou 7, **caractérisée en ce que** le revêtement (50) est un enduit ou une peinture (54) dont la surface extérieure est sensiblement confondue avec la surface continue théorique (46).

10. Nacelle d'aéronef selon la revendication 9, **caractérisée en ce que** le revêtement (50) est une peinture anticorrosion à base de silicone.

## Patentansprüche

1. Verfahren zum Aufbringen einer Beschichtung zur Verbesserung der Laminarströmungen im Bereich einer Verbindung zwischen einer ersten Platte (36) einer Anströmkante und einer zweiten Platte (34) einer in Strömungsrichtung angrenzenden Oberfläche, wobei die erste Platte (36) und die zweite Platte (34) aneinandergefügt sind und äußere Oberflächen aufweisen, die im Bereich der Verbindung bezüglich einer theoretischen kontinuierlichen Oberfläche (46) einen vorspringenden Abschnitt aufweisen, **dadurch gekennzeichnet, dass** dieses die folgenden Verfahrensschritte umfasst, die darin bestehen:
- die theoretische kontinuierliche Oberfläche (46) im Bereich der Verbindung zu bestimmen,
- eine Nut (48) von geringer Tiefe bezüglich der theoretischen kontinuierlichen Oberfläche (46) zu bewerkstelligen, die in den beiden äußeren Oberflächen der Platten beidseits der Verbindung ausgebildet ist und die sich über eine derartige Breite erstreckt, dass die äußeren Oberflächen der Platten (34, 36) nicht länger bezüglich der theoretischen Oberfläche (46) vorspringen, und
- eine Beschichtung (50) in die Nut (48) einzubringen, um diese aufzufüllen.

2. Verfahren zum Aufbringen einer Beschichtung zur Verbesserung der Laminarströmungen nach Anspruch 1, **dadurch gekennzeichnet, dass** die Dicke der Beschichtung (50) derart eingestellt ist, dass die äußere Oberfläche der Beschichtung (50) mit der theoretischen kontinuierlichen Oberfläche (46) zusammenfällt.

3. Verfahren zum Aufbringen einer Beschichtung zur Verbesserung der Laminarströmungen nach Anspruch 1 oder 2, **dadurch gekennzeichnet, dass** die Beschichtung (50) ein Blech (52) von einer verhältnismäßig geringen Dicke umfasst, die im Wesentlichen gleich der Tiefe der Nut (48) ist, und mit einer Breite, die im Wesentlichen gleich derjenigen der Nut (48) ist, um sich an die Form der Nut (48) vollkommen anzupassen.

4. Verfahren zum Aufbringen einer Beschichtung zur Verbesserung der Laminarströmungen nach Anspruch 3, **dadurch gekennzeichnet, dass** das Blech (52) beim Aufbringen gezogen wird und, einmal fixiert, unter Spannung gehalten wird.

5. Verfahren zum Aufbringen einer Beschichtung zur Verbesserung der Laminarströmungen nach Anspruch 1 oder 2, **dadurch gekennzeichnet, dass** die Beschichtung (50) durch die Anwendung eines Anstrichs oder einer Bemalung (54) zur Füllung der Nut (48) erhalten wird, so dass die äußere Oberfläche der Beschichtung (50) im Wesentlichen mit der theoretischen kontinuierlichen Oberfläche (46) zusammenfällt.

6. Gondel eines Luftfahrzeugs mit:
- einem inneren Kanal (32),
- einer äußeren Oberfläche (34),
- im vorderen Teil, einem Einlass, der von einem Wulst (36) begrenzt ist, der den inneren Kanal (32) und die äußere Oberfläche (34) verbindet,
- einer Verbindung zwischen dem Wulst (36) und der äußeren Oberfläche (34), die aneinandergefügt sind, wobei der Wulst (36) und die äußere Oberfläche (34) äußere Oberflächen aufweisen, die im Bereich der Verbindung bezüglich einer theoretischen kontinuierlichen Oberfläche (46) einen vorspringenden Abschnitt aufweisen,
**dadurch gekennzeichnet, dass** diese im Bereich der Verbindung eine Nut (48) von geringer Tiefe bezügliche der theoretischen kontinuierlichen Oberfläche (46) aufweist, die in den beiden äußeren Oberflächen der Platten des Wulstes (36) und der äußeren Oberfläche (34) beidseits der Verbindung ausgebildet ist und die sich über eine derartige Breite erstreckt, dass die äußeren Oberflächen der Platten des Wulstes (36) und der äußeren Oberfläche (34) nicht länger bezüglich der theoretischen Oberfläche (46) vorspringen, und eine Beschichtung (50) aufweist, die in der Nut (48) angeordnet ist, um diese zu füllen.

7. Gondel eines Luftfahrzeugs nach Anspruch 6, **dadurch gekennzeichnet, dass** die Beschichtung (50) eine derartige Dicke aufweist, dass die äußere Oberfläche der Beschichtung (50) mit der theoretischen kontinuierlichen Oberfläche (46) zusammenfällt.

8. Gondel eines Luftfahrzeugs nach Anspruch 6 oder 7, **dadurch gekennzeichnet, dass** die Beschichtung (50) ein Blech (52) von einer verhältnismäßig geringen Dicke umfasst, die im Wesentlichen gleich der Tiefe der Nut (48) ist, und mit einer Breite, die im Wesentlichen gleich derjenigen der Nut (48) ist, um sich an die Form der Nut (48) vollständig anzupassen.

9. Gondel eines Luftfahrzeugs nach Anspruch 6 oder 7, **dadurch gekennzeichnet, dass** die Beschichtung (50) ein Anstrich oder eine Bemalung (54) ist, deren äußere Oberfläche im Wesentlichen mit der theoretischen kontinuierlichen Oberfläche (46) zusammenfällt.

10. Gondel eines Luftfahrzeugs nach Anspruch 9, **dadurch gekennzeichnet, dass** die Beschichtung (50) ein Antikorrosionsanstrich auf der Grundlage von Silikon ist.

## Claims

1. Process for deposition of a coating whose purpose is to improve the laminar flows at a junction between a first panel (36) of a leading edge and a second panel (34) of an adjacent surface according to the direction of said flows the first panel (36) and the second panel (34) being placed end to end and comprising outside surfaces that comprise a projecting portion relative to a theoretical continuous surface (46) at the junction, **characterized in that** it comprises the following stages that consist in:
- Determining the theoretical continuous surface (46) at said junction,
- Producing a shallow groove (48) relative to the theoretical continuous surface (46), produced in the two outside surfaces on either side of said junction which extends over a width such that the outside surfaces of said panels (34, 36) do not project further relative to the theoretical surface (46), and
- Depositing a coating (50) in the groove (48) in such a way as to fill it in.

2. Process for deposition of a coating whose purpose is to improve the laminar flows according to Claim 1, wherein the thickness of the coating (50) is adjusted in such a way that the outside surface of said coating (50) is merged with the theoretical continuous surface (46).

3. Process for deposition of a coating whose purpose is to improve the laminar flows according to Claim 1 or 2, wherein the coating (50) comprises a piece of sheet metal (52), with a relatively small thickness, approximately equal to the depth of the groove (48), and with a width that is approximately equal to that of the groove (48) so as to perfectly assume the shape of said groove (48).

4. Process for deposition of a coating whose purpose is to improve the laminar flows according to Claim 3, wherein the piece of sheet metal (52) is stretched during the deposition and held by tension once attached.

5. Process for deposition of a coating whose purpose is to improve the laminar flows according to Claim 1 or 2, wherein the coating (50) is obtained by the application of a film or a paint (54) whose purpose is to fill in the groove (48) in such a way that the outside surface of the coating (50) is essentially merged with the theoretical continuous surface (46).

6. Aircraft nacelle that comprises :
- an inside pipe (32),
- an outside surface (34),
- at the front, an air intake that is delimited by a lip (36) that connects the inside pipe (32) and the outside surface (34),
- a junction between said lip (36) and the outside surface (34) placed end to end said lip (36) and the outside surface (34) comprising outside surfaces that comprise a projecting portion relative to a theoretical continuous surface (46) at the junction, **characterized in that** it comprises, at the junction, a shallow groove (48) relative to the theoretical continuous surface (46) of said junction, produced in the two outside surfaces of the panels of the lip (36) and the outside surface (34) on either side of said junction which extends over a width such that the outside surfaces of the panels of said lip (36) and the outside surface (34) do not project further relative to the theoretical surface (46), and a coating (50) that is arranged in the groove (48) in such a way as to fill it in.

7. Aircraft nacelle according to Claim 6, wherein the coating (50) has a thickness such that the outside surface of said coating (50) is merged with the theoretical continuous surface (46).

8. Aircraft nacelle according to Claim 6 or 7, wherein the coating (50) comprises a piece of sheet metal (52), with a relatively small thickness, approximately equal to the depth of the groove (48), and with a width that is approximately equal to that of the groove (48) so as to perfectly assume the shape of said groove (48).

9. Aircraft nacelle according to Claim 6 or 7, wherein the coating (50) is a film or a paint (54) whose outside surface is essentially merged with the theoretical continuous surface (46).

10. Aircraft nacelle according to Claim 9, wherein the coating (50) is a silicone-based anti-corrosion paint.
